# EUROPEAN PATENT APPLICATION

(11) **EP 3 032 095 A1**
(43) Date of publication of application: **15.06.2016**
(21) Application number: 14382504.0
(22) Date of filing: 10.12.2014
(51) Int. Cl.: F03D 7/02, F03D 7/04

(54) **Methods of operating a wind turbine and wind turbines**

(71) Applicant: ALSTOM Renewable Technologies, 38041 Grenoble - Cedex 9 (FR)
(72) Inventor: Guadayol Roig, Marc, 08225 Terrassa (ES)
(74) Representative: ZBM Patents - Zea, Barlocci & Markvardsen

(57) **Abstract**

Method of operating a wind turbine in steady state conditions as a function of wind speed, the wind turbine having at least a generator having a rated rotational speed and a system for varying generator torque, the method comprising a sub-nominal zone of operation for wind speeds below nominal and a supra-nominal zone of operation for wind speeds at or above the nominal wind speed. The sub-nominal zone of operation comprising a first operational range extending from a cut-in wind speed to a first wind speed, a second operational range extending from the first wind speed to a second wind speed, and a third operational range extending from the second wind speed to the nominal wind speed. The method further comprises at least in part of the third operational range, rotating the generator rotor at a rotational speed which is faster than its rated rotational speed.

## Description

The present disclosure relates to methods of operating a wind turbine and wind turbines suitable for such methods.

### BACKGROUND

Modern wind turbines are commonly used to supply electricity into the electrical grid. Wind turbines of this kind generally comprise a rotor with a rotor hub and a plurality of blades. The rotor is set into rotation under the influence of the wind on the blades. The rotation of the rotor shaft drives the generator rotor ("directly driven") either directly or through the use of a gearbox.

A variable speed wind turbine may typically be controlled by varying the generator torque and the pitch angle of the blades. As a result, aerodynamic torque, rotor speed and electrical power will vary.

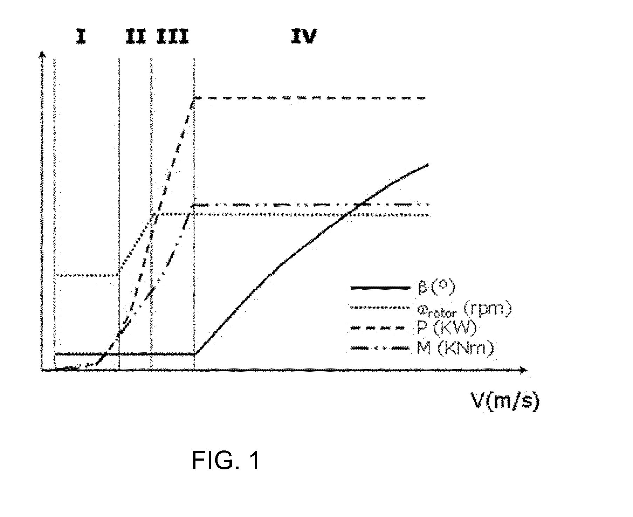

A common prior art steady-state control strategy of a variable speed wind turbine is described with reference to figure 1 which represents a curve commonly known as "power curve" that describes the operation as a function of the prevailing wind speed. In figure 1, the operation of a typical variable speed wind turbine is illustrated in terms of the pitch angle (β), the electrical power generated (P), the generator torque (M) and the rotational velocity of the rotor (ω), as a function of the wind speed.

Even though the wind speed is normally determined in an indirect manner by determining the rotor's rotational speed, e.g. by measuring the rotational speed of the generator, it may be regarded that the control is carried out as a function of the wind speed. Based on e.g. the rotational speed of the generator, the control may be implemented by varying the generator torque and/or the blade pitch angle.

In a first operational range, from the cut-in wind speed to a first wind speed (e.g. approximately 5 or 6 m/s), the rotor may be controlled to rotate at a substantially constant speed that is just high enough to be able to accurately control it. The cut-in wind speed may be e.g. approximately 3 m/s.

In a second operational range, from the first wind speed (e.g. approximately 5 or 6 m/s) to a second wind speed (e.g. approximately 8.5 m/s), the objective is generally to maximize power output while maintaining the pitch angle of the blades constant so as to capture maximum energy. In general, in the second operational range, the pitch angle of the blades may be substantially constant, whereas in order to achieve the objective of maximum energy, the generator torque and thus the rotor speed may be varied so as to keep the tip speed ratio λ (tangential velocity of the tip of the rotor blades divided by the prevailing wind speed) constant so as to maximize the power coefficient Cₚ.

In order to maximize power output and keep Cₚ constant at its maximum value, the rotor torque may be set in accordance with the following equation: T = k. ω², wherein k is a constant, and ω is the rotational speed of the generator. In a direct drive wind turbine, the generator speed substantially equals the rotor speed. In a wind turbine comprising a gearbox, normally, a substantially constant ratio exists between the rotor speed and the generator speed.

This means that by maintaining the tip speed ratio at a constant optimum value the power coefficient can be optimized in this operational range. The wind turbine blades are thus normally designed particularly for their operation in this range.

In a third operational range, which starts at reaching nominal rotor rotational speed and extends until reaching nominal power, the rotor speed may be kept constant, and the generator torque may be varied to such effect. In terms of wind speeds, this third operational range extends substantially from the second wind speed to the nominal wind speed e.g. from approximately 8.5 m/s to approximately 11 m/s.

In a fourth operational range, which may extend from the nominal wind speed to the cut-out wind speed (for example from approximately 11 m/s to 25 m/s), the blades may be rotated ("pitched") to maintain the aerodynamic torque delivered by the rotor substantially constant. In practice, the pitch may be actuated such as to maintain the rotor speed substantially constant. At the cut-out wind speed, the wind turbine's operation is interrupted.

In the first, second and third operational ranges, i.e. at wind speeds below the nominal wind speed (the sub-nominal zone of operation), the blades are normally kept in a constant pitch position, namely the "below rated pitch position". Said default pitch position may generally be close to a 0° pitch angle. The exact pitch angle in "below rated" conditions however depends on the complete design of the wind turbine.

The before described operation may be translated into a so-called power curve, such as the one shown in figure 1. Such a power curve may reflect the optimum operation of the wind turbine under steady-state conditions.

In the supra-nominal zone of operation, i.e. at winds speeds at or above the nominal wind speed, the maximum available energy in the wind stream is very consciously not captured. That is, the blades are actively pitched to a position in which they "catch" less wind, and generate less torque than possible. This is mainly done to limit the structural loads on the wind turbine.

The before described operation is generally employed on all modern wind turbines, possibly with a few slight modifications, such as e.g. a reduction of the rotor speed or power at very high wind speeds. The present disclosure however provides methods for operating wind turbines which are able to increase the energy yield of wind turbines, without the need for any "unconventional systems", such as e.g. active aerodynamic devices.

### SUMMARY

In a first aspect, a method of operating a wind turbine in steady state conditions as a function of a wind speed is provided. The wind turbine has a rotor with a plurality of blades, a generator having a rated rotational speed, one or more pitch mechanisms for rotating the blades around their rotational axis, and a system for varying a torque of the generator. The method comprises a sub-nominal zone of operation for wind speeds below a nominal wind speed and a supra-nominal zone of operation for wind speeds at or above the nominal wind speed. The sub-nominal zone of operation comprises a first operational range which extends from a cut-in wind speed to a first wind speed, a second operational range extending from the first wind speed to a second wind speed, and a third operational range extending from the second wind speed to the nominal wind speed. And the method comprises in the first operational range, varying the torque of the generator to maintain a rotor speed substantially constant, in the second operational range, varying the torque of the generator as a function of wind speed so as to maintain a constant tip speed ratio, and in at least a part of the third operational range, rotating the generator rotor at a rotational speed which is faster than its rated rotational speed.

Throughout the present description and claims the rated rotational speed of the generator is to be understood as the rotational speed of the generator rotor at the nominal power of the generator. The rated rotational speed may also be referred to as a "nominal rotational speed".

In accordance with this aspect, in steady-state conditions over the third operational range, an increase in the generator rotor rotational speed involves a power output increment. Consequently, the energy produced by the wind turbine can be increased in that operational range. Increasing the rotor rotational speed as wind speed increases involves maintaining the tip speed ratio λ closer to its optimum value, and possibly substantially constant at its optimum value thus producing an increase in the power coefficient, Cₚ, (closer to ideal).

As it is known, wind turbine blades are generally designed to have an optimum performance in the second operational range (from about 6 m/s to about 8,5 m/s). By allowing the rotor rotational speed to be higher than the rated rotational speed in the third operational range (or in part of this range), a performance substantially similar to that obtained in the second operational range can be obtained for wind speeds higher than around 8,5 m/s, but still lower than nominal wind speed (11 m/s). Furthermore, at these sub-nominal wind speeds this can be done generally without compromising the generator as the generator power is still lower than its nominal value.

Thus, by increasing generator rotor rotational speed, the performance (electrical energy production) of the wind turbine may be enhanced along the third operational range (or at least in part of this operational range).

In a second aspect, a wind turbine is provided. The wind turbine may comprise a rotor with a plurality of blades, a generator having a rated rotational speed, a system for varying a torque of the generator, one or more pitch mechanism for rotating the blades around their longitudinal axis and a wind turbine controller adapted to carry out the methods substantially as hereinbefore described.

### BRIEF DESCRIPTION OF THE DRAWINGS

Non-limiting examples of the present disclosure will be described in the following, with reference to the appended drawings, in which:
Figure 1 shows a typical power curve of a wind turbine;
Figures 2a and 2b show different power curves resulting from using the present methods according to different examples; and
Figure 3 shows the variation of the generator torque as a function of the rotational speed when using some examples of these methods.

### DETAILED DESCRIPTION OF EXAMPLES

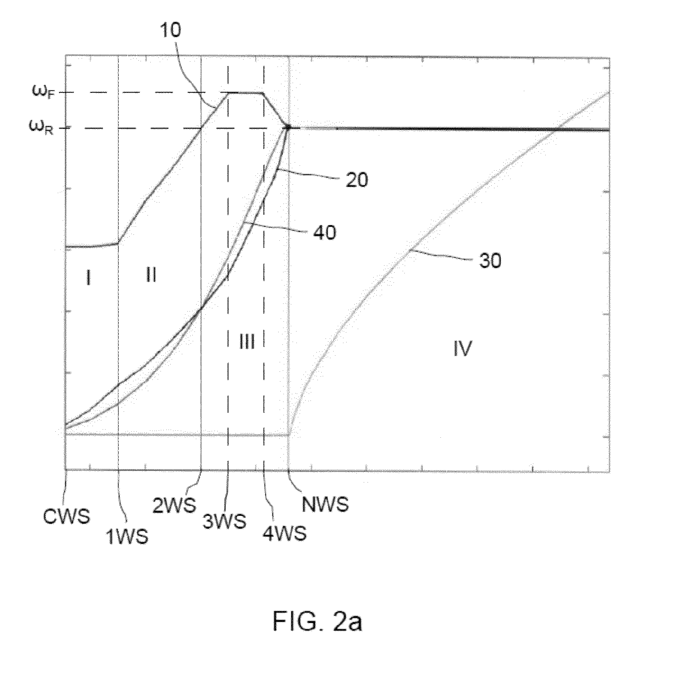

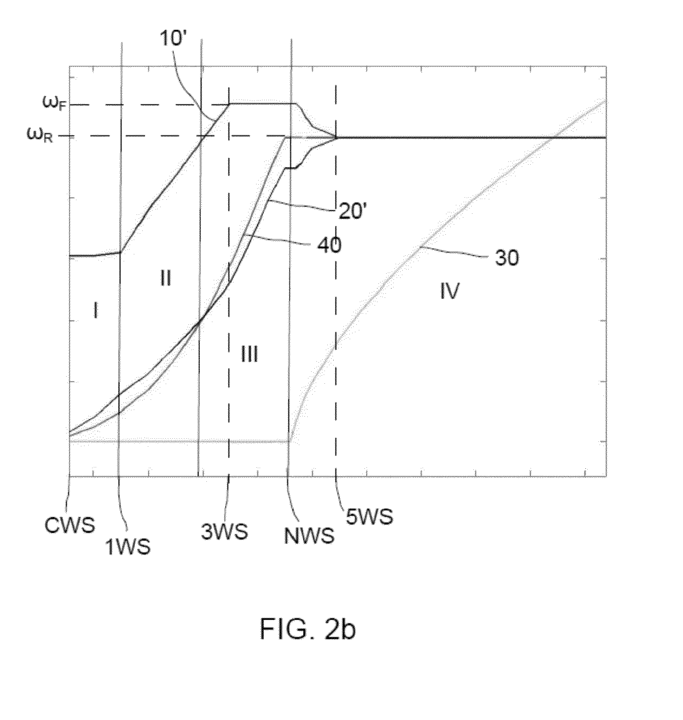

The power curve of figure 1 has been discussed before. Modified power curves are shown in figures 2a and 2b. In the example of figure 2a, curve 20 shows the torque applied, curve 10 shows the rotational speed, curve 30 the pitch angle and curve 40 the electrical power generated as a function of wind speed. As explained in connection with figure 1, operation of a wind turbine in a sub-nominal zone of operation (i.e. below nominal wind speed NWS) may comprise a first operational range that may extend from the cut-in wind speed CWS to a first wind speed 1WS, a second operational range that may extend from the first wind speed 1WS to a second wind speed 2WS, a third operational range that may extend from the second wind 2WS to nominal wind speed NWS.

In further figures the same reference numbers will be used for matching parts.

In the example of figure 2a, the torque applied in the third operational range III, i.e. starting at a second wind speed 2WS, may follow a substantially similar curve as that applied along the second operational range II. This means that as wind speed increases, the torque applied from the second wind speed 2WS, in an example around 8,5 m/s, may be lower than that commonly applied (shown in figure 1) in order to maintain nominal rotational speed along the third operational range as shown in figure 1. The rotational speed may thus be higher (faster rotational speed ω_{F}) than nominal ω_{R}, at least for wind speeds below nominal wind speed NWS (in an example around 11 m/s). See curve 10.

In some cases, in methods substantially as hereinbefore described the rotor torque in the second operational range II and in at least part of the third operational range III (from wind speeds higher than the second wind speed 2WS and below nominal wind speed NWS) may be determined in accordance with the equation: T = k. ω², wherein ω is the generator rotor speed and k is a constant in the third operational range III.

In an example, the "lower" applied torque (see curves 20 and 20'), allows a higher generator rotor rotational speed ω_{F} (curve 10), for example, substantially as if the curve 10 (or 10') in the second operational range II is maintained along at least part of the third operational range III. For example, up to a third wind speed 3WS (in an example, approximately 10 m/s).

A further effect of increasing generator rotor rotational speed over at least a portion of the third operational range III is that the Cₚ may be maintained substantially constant at least over the part of the third operational range III in which the rotational speed is higher than the rated rotational speed. This is so because the tip speed ratio λ is thus maintained substantially constant as wind speed increases.

In the example of figure 2a, the method may further comprise maintaining the rotational speed which is faster than the rated rotational speed ω_{R} at a substantially constant level (the value of the faster rotational speed ω_{F}) from the third wind speed 3WS to a fourth wind speed 4WS which may be lower than nominal wind speed NWS and gradually reducing the faster rotational speed ω_{F} towards the rated rotational speed ω_{R} from the fourth wind speed 4WS to the nominal wind speed NWS. In alternative examples, the gradual reduction of the faster rotational speed ω_{F} may be done directly from the third wind speed 3WS to the nominal wind speed NWS, i.e. without maintaining the faster rotational speed between the third wind speed 3WS and fourth wind speed 4WS. In both cases, gradually reducing the faster rotational speed ω_{F} may be done by gradually increasing the torque up to that theoretically applied to maintain the rated rotational speed ω_{R}.

As explained before, wind turbine blades are normally designed for an optimum yield in the second operational range II. By running the generator rotor faster than its rated rotational speed (and at wind speeds lower than nominal wind speed NWS), an operational situation substantially similar to that of the second operational range II can thus be reached by maintaining the optimum tip speed ratio λ over at least a portion of the third operational range III, i.e. from wind speeds higher than the second wind speed 2WS and to the third wind speed 3WS or fourth wind speed 4WS depending on circumstances that are below nominal wind speed NWS (normally around 11 m/s). This enhances the power delivered by the wind turbine as during most of the wind turbine life it is subjected to wind speeds within the range between a first wind speed 1 WS to the third wind speed 3WS or fourth wind speed 4WS.

In further examples, maintaining the rotational speed which is faster than the rated rotational speed ω_{R} at a substantially constant level, i.e. the value of the faster rotational speed ω_{F} may be done from the third wind speed 3WS to nominal wind speed NWS. In these examples, the energy produced may be enhanced until the nominal wind speed NWS.

In some of these cases, when the nominal wind speed NWS is reached the method may further comprise abruptly reducing the rotational speed to the rated rotational speed ω_{R}.

In general, a practical implementation may require some control of the transitions, like a hysteresis control, to avoid continuous rotor speed oscillations at wind speeds around the nominal wind speed.

In other of these cases as shown in the example of figure 2b, the faster rotational speed ω_{F} may be gradually reduced from nominal wind speed NWS to a fifth wind speed 5WS which is above nominal wind speed NWS. In an example the fifth wind speed 5WS may be equal to nominal wind speed NWS plus 2 m/s. This means the faster rotational speed ω_{F} may be gradually reduced to the rated rotational speed ω_{R} before surpassing nominal wind speed NWS in 2 m/s. In alternative examples, the fifth wind speed 5WS may be defined at other values, for example, nominal wind speed NWS plus 3 or 4 m/s. Other values may also be foreseen.

In the example of figure 2b curve 20' shows the torque applied as a function of wind speed and curve 10' shows the rotational speed as a function of wind speed.

In further alternative methods the faster rotational speed ω_{F} may be maintained at a substantially constant level up to the fifth wind speed 5WS which above nominal wind speed NWS and the method may further comprise abruptly reducing the faster rotational speed ω_{F} to the rated rotational speed ω_{R} at the fifth wind speed 5WS.

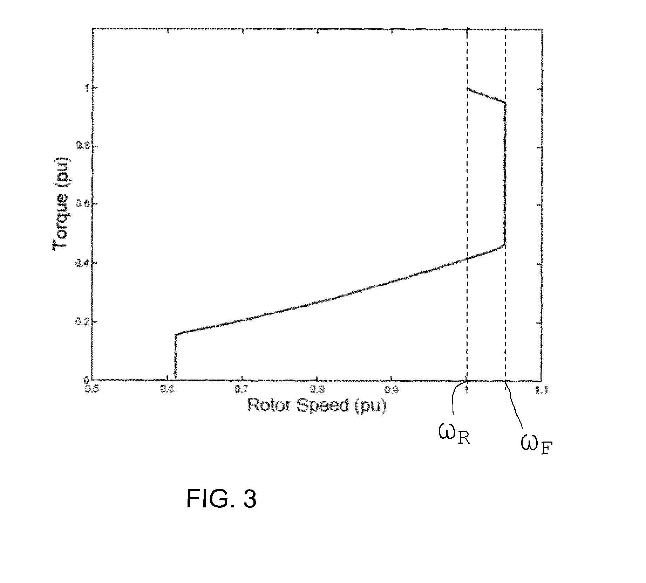

Figure 3 shows the variation of the generator torque as a function of the rotational speed according to examples of these methods. In figure 3 the faster rotational speed may be equal to 1,05 times the nominal rotational speed (e.g. faster rotational speed at the third wind speed 3WS). This adapted rotational speed limit (maximum faster rotational speed) may be maintained substantially constant for a while, up to the fourth wind speed 4WS and before reaching the nominal wind speed NWS it may be gradually reduced to the rated rotational speed as explained in connection with figure 2a.

In general, in examples of the methods described herein the maximum rotational speed that is faster than the rated rotational speed may be lower than 15% over the rated rotational speed. In alternative examples, it may be lower than 10% over the rated rotational speed.

As mentioned before, even though the methods hereinbefore described have been described as operations as a function of a wind speed, it should be noted that in such operation the wind speed may be determined in a direct manner, but also in an indirect manner, e.g. by measuring the rotational speed of the generator.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A method of operating a wind turbine in steady state conditions as a function of a wind speed, the wind turbine having a rotor with a plurality of blades, a generator having a rated rotational speed, one or more pitch mechanisms for rotating the blades around their rotational axis, and a system for varying a torque of the generator, wherein
the method comprises a sub-nominal zone of operation for wind speeds below a nominal wind speed and a supra-nominal zone of operation for wind speeds at or above the nominal wind speed, wherein
the sub-nominal zone of operation comprises a first operational range which extends from a cut-in wind speed to a first wind speed, a second operational range extending from the first wind speed to a second wind speed, and a third operational range extending from the second wind speed to the nominal wind speed, and the method further comprises
in the first operational range, varying the torque of the generator to maintain a rotor speed substantially constant,
in the second operational range, varying the torque of the generator as a function of wind speed so as to maintain a constant tip speed ratio, and
at least in part of the third operational range, rotating the generator rotor at a rotational speed which is faster than its rated rotational speed.

2. The method of claim 1, wherein in the second operational range the rotor torque, T, is determined in accordance with T = k. ω², wherein ω is the generator rotor speed and k is a constant, and wherein at least in a part of the third operational range the rotor torque is also determined in accordance with T = k. ω².

3. The method according to claim 2, wherein the rotor torque is determined in accordance with T = k. ω² substantially over the whole third operational range.

4. The method of claim 2 or 3, wherein the rotor torque, T, is determined in accordance with T = k. ω² in a first part of the third operational range from the second wind speed to a third wind speed, the third wind speed being higher than the second wind speed and lower than the nominal wind speed.

5. The method of claim 4, further comprising maintaining the rotational speed which is faster than the rated rotational speed at a substantially constant level from the third wind speed to the nominal wind speed.

6. The method of claim 4, further comprising gradually reducing the rotational speed which is faster than the rated rotational speed towards the rated rotational speed from the third wind speed to the nominal wind speed.

7. The method of claim 4, further comprising maintaining the rotational speed which is faster than the rated rotational speed at a substantially constant level from the third wind speed to a fourth wind speed, which is lower than the nominal wind speed.

8. The method of claim 5, further comprising abruptly reducing the rotational speed to the rated rotational speed at nominal wind speed.

9. The method of claim 5, further comprising gradually reducing the rotational speed to the rated rotational speed from nominal wind speed to a fifth wind speed.

10. The method of claim 9, wherein the fifth wind speed is nominal wind speed plus approximately 2 m/s.

11. The method of any of claims 1 - 10, further comprising in the supra-nominal zone of operation or from nominal wind speed plus approximately 2 m/s rotating the generator rotor at the rated rotational speed.

12. The method of any of claims 1 - 11, wherein the maximum rotational speed that is faster than the rated rotational speed is lower than 15% over rated rotational speed.

13. The method of any of claims 1 - 12, wherein in the third operational range, the rotational speed that is faster than the rated rotational speed is controlled by applying a generator torque that is lower than that theoretically applied to maintain the rated rotational speed substantially constant as a function of the wind speed.

14. A wind turbine comprising a rotor with a plurality of blades, a generator having a rated rotational speed, one or more pitch mechanism for rotating the blades around their longitudinal axis, a system for varying a torque of the generator, and a wind turbine controller adapted to carry out a method according to any of claims 1 - 13.

15. The wind turbine of claim 14, wherein the wind turbine is a direct drive wind turbine.
